# DEMANDE DE BREVET EUROPEEN

(11) **EP 1 109 257 A1**
(43) Date de publication de la demande: **20.06.2001**
(21) Numéro de dépôt: 00403302.3
(22) Date de dépôt: 24.11.2000
(51) Int. Cl.: H01R 4/64

(54) **Equipment électronique**

(30) Priorité: 14.12.1999 FR 9915785
(71) Demandeur: Alstom, 75116 Paris (FR)
(72) Inventeur: Estieule, Bruno, 69007 LYON (FR); Luscher, Patrick, 38540 Heyrieux (FR); Maillard, Daniel, 01800 Charnoz/Ain (FR); Robin, Michel-André, 69003 Lyon (FR)
(74) Mandataire: Hagel, Francis

(57) **Abrégé**

Pour permettre une intégration facile d'un équipement électronique (1) dans un ensemble (20), on prévoit de séparer un premier connecteur fonctionnel de l'équipement électronique d'un deuxième connecteur (12, 22) de masse (20). En agissant ainsi, on est capable d'une part de tester les aptitudes diélectriques de l'équipement électronique réalisé au stade du laboratoire et in situ, de même qu'on est capable d'imposer facilement une liaison électrique de sécurité qui respecte une norme. Dans un exemple, le deuxième connecteur comporte un boulon et un écrou.

## Description

La présente invention a pour objet un équipement électronique, en particulier un équipement électronique utilisable dans le domaine ferroviaire pour la commande de machines électriques de puissance. Les équipements électroniques concernés seront principalement des circuits montés sur des cartes électroniques, des circuits imprimés, et comportant des circuits discrets tels que des circuits intégrés de commande, des microprocesseurs, des circuits FPGA, des auto-coupleurs, des transformateurs, des condensateurs, où autres reliés entre eux par des connexions électriques. Le but de l'invention est de permettre une maintenance simplifiée de ces équipements électroniques tout en respectant par ailleurs des consignes de sécurité propres à protéger des opérateurs qui manipulent ces équipements électroniques ou des installations dans lesquels ces équipements électroniques sont installés.

Dans le domaine des équipements électroniques notamment lorsqu'ils commandent une électronique de puissance, il est fréquent de provoquer l'indépendance électrique de certaines parties des circuits. Des transmissions de signaux entre ces parties indépendantes s'effectuent alors par des couplages inductifs, optiques, voire des émissions et réceptions radioélectriques. Cette indépendance des circuits conduit toutefois à la naissance de courants dits de mode commun s'écoulant par des capacités parasites de barrières de potentiel. Ces courants de mode commun peuvent induire dans les circuits électroniques des potentiels fluctuant dans le temps, et interprétés comme des signaux de commande. Il en résulte que le fonctionnement de l'équipement électronique est désorganisé et que la fonction qu'un tel équipement remplit est mal assurée.

Pour remédier à ces problèmes et pour limiter ces courants de mode commun il est prévu de blinder les circuits et notamment d'y réaliser une masse électrique reliée à la masse d'un châssis d'une part et d'autre part de réunir un potentiel interne de l'électronique à la masse ainsi constituée, par exemple une connexion de zéro volt de l'électronique, à un endroit tel que les courants de mode commun ainsi collectés soient évacués sans gêne pour l'électronique. Ainsi dans le domaine ferroviaire, le châssis concerné est électriquement relié à un chaudron d'un véhicule ferroviaire, une locomotive par exemple, qui est par ailleurs relié électriquement aux rails sur lesquels circule le train. Ces rails sont eux-mêmes reliés de place en place par des prises de terre aux sols sur lesquels ils reposent, par l'intermédiaire de traverses qui sont en général isolantes et mauvaises conductrices, en bois ou en béton Si une telle précaution n'est pas prise, des différences de potentiels fluctuants entre le circuit électronique et le châssis relié au sol environnant peuvent être telles qu'elles conduisent à des hautes tensions de claquage. Ces hautes tensions peuvent provoquer des claquages de circuits intégrés de l'équipement électronique par exemple ou d'isolement. Indépendamment de ces problèmes de courants de mode commun et de claquages, il existe un réel danger pour le personnel qui a à manipuler ces équipements. Notamment, la norme NFC 15 100 qui se préoccupe de la sécurité des personnels impose par exemple que la tension entre deux points accessibles par la main de l'homme ne dépasse pas 48 volts.

La liaison électrique entre un circuit de zéro volt d'un équipement électronique de sous-ensemble et la masse d'un châssis d'un équipement complet est donc nécessaire pour des raisons de compatibilité électromagnétique. Elle est donc aussi utile pour des raisons de sécurité des personnes amenées à être en contact avec les parties métalliques nues du sous-ensemble ou de l'équipement complet.

Dans l'état de la technique cette liaison est réalisée par un fil qui utilise une borne d'un connecteur de l'équipement électronique de cet ensemble. Un installateur, un ensemblier, est chargé de l'intégration de l'équipement dans le véhicule ferroviaire. Il connecte le blindage de l'équipement à la masse locale.

Dans l'invention on s'est alors rendu compte que la connexion de zéro volt de l'équipement électronique à la masse châssis de l'équipement complet par le connecteur ne permettait pas des tests diélectriques de production et des tests diélectriques d'intégration. Ces derniers sont réalisés par l'ensemblier. En réalisant alors un deuxième connecteur muni dans un exemple préféré d'un boulon amovible pour assurer la connexion du zéro volt de l'équipement électronique au châssis de l'équipement complet, on obtient une amovibilité qui résout tous les problèmes. En effet cette amovibilité permet de maîtriser la conception de la connexion électrique, au niveau de la conception de l'équipement électronique, et non plus au niveau de la conception de l'équipement complet. En effet dans l'état de la technique, la compatibilité électromagnétique de l'équipement complet n'était obtenue que sous réserve d'une réalisation donnée des connexions par l'équipementier. En utilisant comme dans l'invention un boulon, aucune latitude n'est laissée à cet équipementier pour réaliser les connexions électriques autrement que comme le circuit a été conçu.

Au-delà du boulon, forme préférée de connexion car amovible, simple et efficace, l'invention concerne la définition, au stade de la conception de l'équipement électronique, du lieu où sera placé un deuxième connecteur pour la masse. Ce lieu est alors choisi pour un meilleur résultat en termes de compatibilité électromagnétique, indépendamment du lieu retenu pour un connecteur fonctionnel. Dans ces conditions, on est beaucoup plus à même de reproduire sur site un idéal de réalisation mis au point en laboratoire. Cette mise au point en laboratoire permet en conséquence de minimiser l'impédance de la connexion électrique pour atteindre une meilleure compatibilité électromagnétique. Par ailleurs le fait de pouvoir démonter le boulon améliore l'accès à cette connexion électrique et en diminue le temps de déconnexion reconnexion pendant des essais diélectriques divers. Enfin, le montage d'un boulon dans le mode préféré étant tellement simple, il devient envisageable de prévoir plusieurs lieux de connexion électrique indépendants de la position de connecteurs fonctionnels de l'équipement électronique de manière à abaisser l'impédance résultante par la mise en parallèle de plusieurs connexions électriques du zéro volt à la masse châssis, au plus près des fonctions à protéger contre les perturbations.

Il résulte en outre des différentes contraintes énoncées qu'il était difficile de tester la fonction d'un équipement électronique indépendamment de son environnement de connexion à la masse puisque par définition un tel environnement était imposé. La constance de ces connexions empêchait que soit vérifiée avec efficacité que certaines parties des équipements électroniques étaient suffisamment isolées par rapport à la masse électrique du châssis qui reçoit l'équipement. Notamment, il existe dans ces équipements électroniques des connexions dites de zéro volt dont le potentiel est intermédiaire entre des tensions plus basses (négatives par exemple) et des tensions plus élevées (positives). Ces connexions de zéro volt doivent lors de l'installation de l'équipement dans l'ensemble être reliées à la masse du châssis de cet ensemble.

Lors de la vérification de l'équipement électronique, les tests d'isolement de ces connexions à zéro volt par rapport à la masse et au châssis de l'équipement électronique sont effectués avec des ohmmètres ou des diélectrimètres. Normalement l'impédance mesurée devrait être supérieure à plusieurs mégohms et les tensions de claquage supérieures à plusieurs centaines de volts. En outre ces mesures d'impédance sont faites également en alternatif pour mesurer les réactances, qui doivent être les plus faibles possibles pour évacuer les courants de mode commun et limiter les tensions de mode commun.

Dans l'invention, pour remédier aux problèmes nés de ces contraintes et de ce mode de vérification de l'équipement électronique, il est prévu en outre de réaliser sur l'équipement électronique une connexion de zéro volts et une connexion de masse. Sur l'équipement électronique ces deux connexions sont indépendantes l'une de l'autre. Comme en utilisation ces deux connexions doivent être reliées, on prévoit alors qu'elles soient reliées ensemble par l'intermédiaire de la masse d'un châssis sur lequel l'équipement électronique est monté. En agissant ainsi, l'équipement électronique une fois mis en place souscrit à toutes les contraintes, notamment celles imposées par la norme. Il souscrit par ailleurs aux meilleures conditions de fonctionnement, celles où le zéro volt est relié à la masse électrique (par l'intermédiaire de la masse du châssis). Enfin, lorsque l'équipement électronique est démonté, où au moins lorsque la connexion de zéro volt est déconnectée, les deux connexions sont électriquement indépendantes, et le circuit électronique est alors susceptible de subir tous les tests pour révéler des éventuels défauts de fonctionnement ou d'isolement.

Dans l'état de la technique, les équipotentielles de référence des circuits électroniques de commande, par exemple la connexion de zéro volt, sont reliées, par l'intermédiaire des connecteurs des circuits imprimés, au blindage des circuits électroniques de commande des circuits de puissance (châssis de l'équipement, armoire électronique ou tiroir), lui-même relié au châssis du véhicule ferroviaire, puis par l'intermédiaire des roues du véhicule aux rails, puis à la terre. Selon l'invention, la connexion de zéro volt est toujours distribuée sur les circuits électroniques par l'intermédiaire des connecteurs des cartes électroniques, mais ce potentiel n'est relié qu'en un point précis au blindage de l'électronique à l'aide d'une connexion amovible permettant de vérifier à tout moment, y compris sur le véhicule, l'isolement du zéro volt par rapport aux blindages et à la masse, tout en assurant la sécurité du personnel et l'évacuation des courants de mode commun, en un point prévu dès la conception, en fonctionnement normal.

L'invention a donc pour objet un équipement électronique comportant une connexion de zéro volt, des connexions fonctionnelles et un premier connecteur pour connecter les connexions fonctionnelles de l'équipement à des connexions d'un ensemble, cet ensemble comportant un châssis conducteur, caractérisé en ce qu'il comporte un second connecteur physiquement distant du premier connecteur pour connecter la connexion de zéro volt à une masse du châssis conducteur de cet ensemble.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1: une représentation schématique d'un équipement électronique selon l'invention ;
- Figure 2: des détails d'un mode préféré de réalisation d'un deuxième connecteur ;
- Figures 3a et 3b : des précisions dimensionnelles du deuxième connecteur préféré.

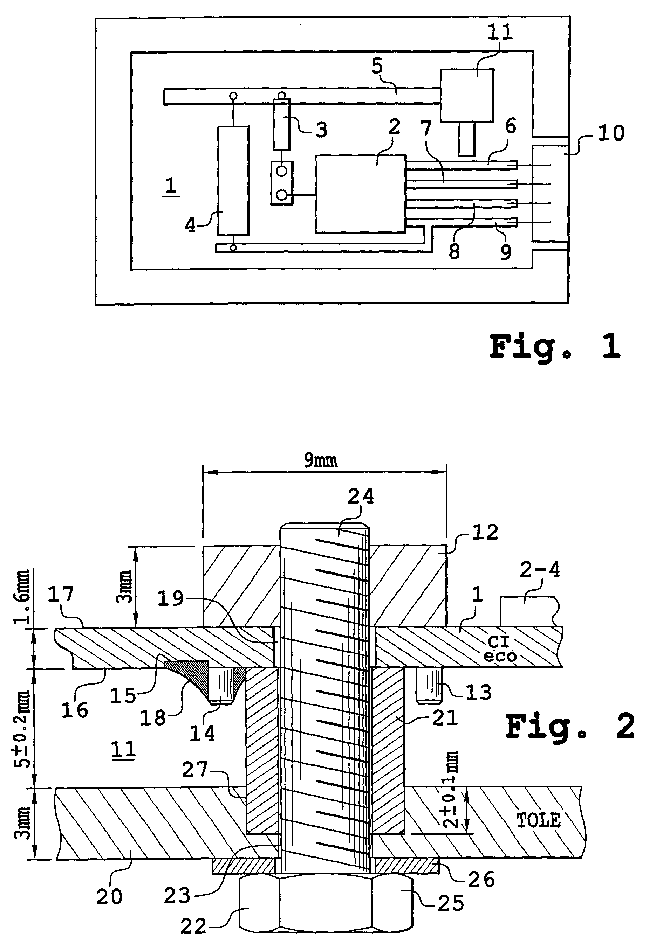

La figure 1 montre un équipement électronique selon l'invention. Celui-ci comporte ici schématiquement représenté un circuit imprimé 1 sur lequel est monté un ensemble de circuits électroniques tels que 2 à 4. L'équipement électronique 1 comporte par ailleurs une connexion 5 de zéro volts et des connexions fonctionnelles telles que 6 à 9. Une de ces dernières connexions, par exemple la connexion 8, peut être une connexion de masse classique. Ici la connexion 8 est électriquement indépendante de la connexion 5 de zéro voit avec laquelle elle sera reliée électriquement lorsque l'équipement sera monté dans un ensemble. Dans l'état de la technique les connexions 5 à 9 était toutes ramenées à un connecteur 10 permettant de connecter le circuit électronique 1 à un ensemble plus complet (non représenté) comportant des connexions correspondantes, et notamment une connexion de masse. Selon une caractéristique essentielle de l'invention, les connexions entre le zéro volt de la connexion 5 et la connexion 8 de masse ont été supprimées sur le circuit imprimé. Le connecteur 10 concerne toujours les connexions fonctionnelles 5 à 9. Ces connexions fonctionnelles transmettent des signaux électriques de commande et/ou de puissance. La connexion de zéro volt est munie quant à elle d'au moins un deuxième connecteur 11 supplémentaire. Le deuxième connecteur 11 est destiné à connecter la connexion 5 de zéro volts à un châssis conducteur qui porte l'équipement électronique 1.

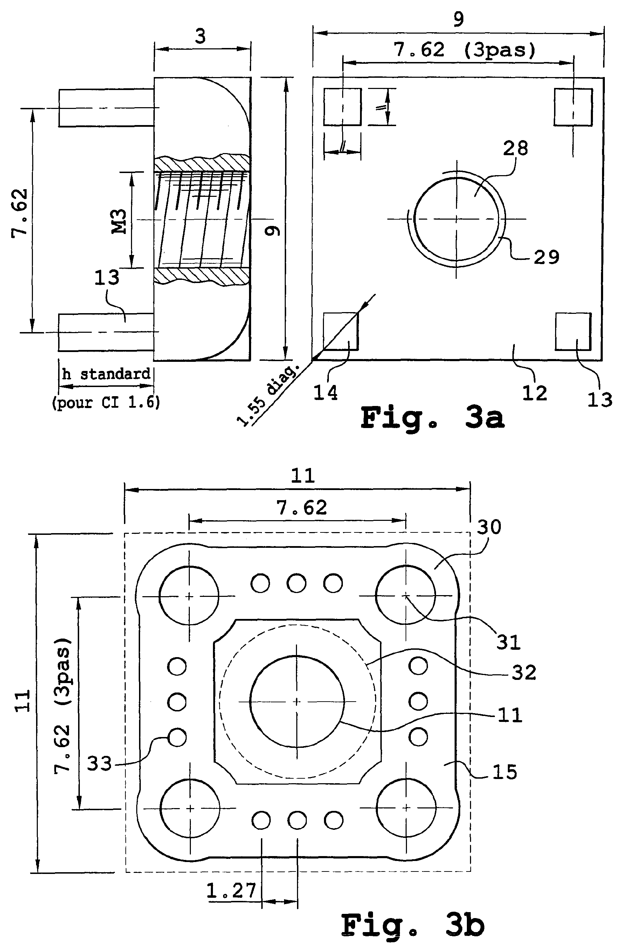

La figure 2 montre un mode préféré de réalisation du deuxième connecteur 11. Ce deuxième connecteur 11 comporte principalement un écrou 12 à picots munis de picots tels que 13 et 14 qui sont connectés à une piste électrique 15 du circuit imprimé électronique 1. Dans un exemple, l'équipement électronique 1 est un circuit imprimé biface, la piste 15 se trouvant sur une face 16 autre que celle 17 où se trouvent les circuits électroniques 2 à 4. Dans un exemple, les picots 14 sont soudés à la piste 15 par des plots de soudure 18. Les plots 18 assurent tant le maintien mécanique de l'écrou 12 sur le circuit 1 que la conduction électrique de la piste 15 à cet écrou 12 conducteur. La piste 15 est reliée à la connexion 5, notamment par des trous métallisés. L'écrou 12 est fixé sur le circuit 1 en regard d'un perçage 19 centré sur l'axe de son filetage, et légèrement plus grand que ce filetage.

Le circuit 1 est destiné à être monté dans un ensemble maintenu par un châssis 20 conducteur, par exemple en tôle. Une entretoise 21, de préférence isolante, permet d'écarter le châssis 20 du circuit 1. Pour ce maintien, un boulon 22 passe dans une réservation 23 du châssis 20 et se visse par son extrémité 24 dans l'écrou 12. La réservation peut être un trou ou une échancrure dans le châssis 20. De préférence la tête 25 du boulon 22 repose contre le châssis 20 par l'intermédiaire d'une rondelle 26 conductrice électrique et élastique. La rondelle 26 est élastique ce qui permet d'effectuer une compression calibrée de l'entretoise, entre le circuit imprimé 1 et le châssis 20, qui ne soit pas rigide. Cette compression électrique permet également que la continuité électrique ne soit pas influencée par les vibrations. En cas de vibration, l'élasticité de la rondelle 20 assure la permanence de la continuité électrique entre la tôle 20 et la piste 15. L'entretoise 21 est de préférence isolante et réalisée sous la forme d'un tube cylindrique, par exemple en PVC, entourant l'axe du boulon 22. Pour améliorer le maintien de l'ensemble, l'entretoise 21 peut également être insérée dans un alésage 27 réalisé dans le châssis 20. La figure 2 donne par ailleurs un ensemble de cotes montrant les dimensions préférées de l'assemblage.

La figure 3a montre une forme préférée de réalisation de l'écrou. La partie droite de la figure montre une vue en plan de l'écrou 12 formant le connecteur 11, la partie gauche montrant une vue en coupe prise selon une des médianes. L'écrou 12 possède dans un exemple quatre picots tels que 13 à 14, de sections carrées, montés dans les quatre coins de l'écrou 12 carré. La hauteur des picots est une hauteur standard pour des circuits imprimés, dans un exemple elle vaut 1,6 mm. L'écrou 12 possède en son centre un trou 28 muni d'un filetage 29. Dans un exemple, aux endroits à souder, l'écrou 12 est en laiton et est recouvert d'une pellicule de 2 à 5 micromètres de cuivre elle-même revêtue d'une couche d'étain de 3 à 6 micromètres

La figure 3b montre la réalisation d'une piste 15 à réaliser sur l'autre face 16 du circuit imprimé. La piste 15 possède quatre pastilles périphériques telles que 30 à réaliser autour de trous métallisés 31 destinés à recevoir chacune un des picots 13 ou 14. Les trous métallisés 31 permettent de relier des pistes gravées sur des faces 16 du circuit imprimé à des pistes réalisées sur des faces 17 du circuit imprimé, notamment la piste 5 à la piste 15. La piste 15 forme globalement un quadrilatère laissant une zone 32 sans piste et comportant par ailleurs une réservation 19 pour un perçage de passage du boulon 22. Des vias 33 peuvent être des trous métallisés également.

Si par le connecteur 10 la piste 8 de masse est reliée à une masse du châssis, la mise en place ou l'enlèvement du boulon 22 assure la connexion électrique entre elles, ou l'isolement respectivement, des pistes 5 et 8. C'est la raison pour laquelle l'entretoise 21 est isolante (elle assure l'isolement si le boulon 22 n'est pas présent) et est insérée dans l'alésage 27 (elle tient alors toute seule).

La distance du connecteur 10 au connecteur 11 est dictée par une implantation la plus propice possible du boulon 22 eu égard aux contraintes de compatibilité électromagnétique. Eventuellement plusieurs connecteurs 11 peuvent être montés sur la piste 5.

## Revendications

1. Equipement électronique comportant une connexion (5) de zéro volt, des connexions fonctionnelles (6-9) et un premier connecteur (10) pour connecter les connexions fonctionnelles de l'équipement à des connexions d'un ensemble, cet ensemble comportant un châssis conducteur (20), caractérisé en ce qu'il comporte un second connecteur (11) physiquement distant du premier connecteur (10) pour connecter la connexion de zéro volt à une masse du châssis conducteur de cet ensemble et en ce que ladite connexion (5) de zéro volt est électriquement indépendante des connexions fonctionnelles (6-9) du premier connecteur (10).

2. Equipement selon la revendication 1, caractérisé en ce que le second connecteur comporte un écrou (12) à picots (13, 14) connecté (18) par des picots à une piste électrique (15, 5) de l'équipement, une entretoise mécanique (21) pour écarter l'équipement du châssis et un boulon (22) conducteur passant dans une réservation (23) du châssis, vissé dans l'écrou à picots et connecté (26) au châssis.

3. Equipement selon la revendication 2, caractérisé en ce que les picots de l'écrou sont soudés à des pistes de l'équipement.

4. Equipement selon la revendication 3, caractérisé en ce que l'écrou est en laiton recouvert par endroits d'une pellicule de cuivre revêtue d'étain.

5. Equipement selon l'une des revendications 2 à 4, caractérisé en ce que l'entretoise est isolante.

6. Equipement selon l'une des revendications 2 à 5, caractérisé en ce que l'entretoise est cylindrique et entoure le boulon.

7. Equipement selon l'une des revendications 2 à 6 caractérisé en ce que l'entretoise repose dans un alésage (26) du châssis.

8. Equipement selon l'une des revendications 2 à 7, caractérisé en ce que le boulon est relié électriquement au châssis par l'intermédiaire d'une rondelle conductrice.

9. Equipement selon l'une des revendications 1 à 8, caractérisé en ce qu'il comporte un circuit imprimé avec une piste de zéro volt déconnectée d'une piste (8) de masse, et à connecter à cette piste de masse par le deuxième connecteur.

10. Equipement selon l'une des revendications 1 à 9, caractérisé en ce que le châssis conducteur est celui d'un véhicule ferroviaire.
